# EUROPEAN PATENT APPLICATION

(11) **EP 4 586 620 A1**
(43) Date of publication of application: **16.07.2025**
(21) Application number: 23862466.2
(22) Date of filing: 07.09.2023
(51) Int. Cl.: H04N 21/431

(54) **PUSHING PROCESSING METHOD AND APPARATUS FOR VIDEO, AND DEVICE AND MEDIUM**

(30) Priority: 07.09.2022 CN 202211099973
(71) Applicant: BEIJING YOUZHUJU NETWORK TECHNOLOGY CO. LTD., Beijing 101299 (CN)
(72) Inventor: HU, Lele, Beijing 100028 (CN); LI, Lili, Beijing 100028 (CN)
(74) Representative: Dentons UK and Middle East LLP
(86) International application number: PCT/CN2023/117446
(87) International publication number: WO 2024/051772

(57) **Abstract**

The embodiments of the present disclosure relate to a pushing processing method and apparatus, and a device and a medium. The method comprises : when a video sharing card is displayed, detecting a trigger operation on the video sharing card, wherein the video sharing card is determined on the basis of a video type of a shared video and an associated sharing object of the shared video, and the video sharing card comprises a plurality of candidate card areas; determining, from among the plurality of candidate card areas, a target card area matching a trigger position of the trigger operation, and displaying a pushing page corresponding to the target card area, wherein the pushing page comprises a video page of the shared video and/or an object information page of the associated sharing object. In this way, different card areas are set in a video sharing card, and different pushing pages can be directly displayed on the basis of a trigger operation on the different card areas, such that sharing objects which can be directly pushed on the basis of the video sharing card are enriched, and a pushing path to relevant sharing objects is shortened.

## Description

This application claims the priority of Chinese Patent Application No. 202211099973.6 filed on Sep. 7, 2022, the disclosure of which is hereby incorporated in its entirety as a part of this application.

### TECHNICAL FIELD

Embodiments of the present disclosure relate to a video pushing method and apparatus, a device, and a medium.

### BACKGROUND

With the development of computer technology, sharing content through video media has become more prevalent, such as pushing a sharing object by playing a video about it.

In the related art, sharing is done in the form of video sharing cards, where the user can only enter a shared video based on a trigger operation on a video sharing card. When the user needs to acquire the pushing information of other sharing objects associated with the video, they need to actively search or click on link information of the corresponding sharing object in a comment section after triggering a comment page in the shared video so as to open a pushing page of the corresponding sharing object.

However, in the aforementioned sharing method using video sharing cards, based on the trigger operation on the video sharing card, the user can only enter the shared video, and the sharing objects are relatively limited. Moreover, the user cannot directly access the pushing information of other sharing objects associated with the video through the video sharing card, which leads to a longer pushing path for the relevant sharing objects.

### SUMMARY

To solve the above technical problems or at least partially solve the above technical problems, the present disclosure provides a video pushing method and apparatus, a device, and a medium. In the embodiments of the present disclosure, different card regions are set in a video sharing card, and based on trigger operations on the different card regions, different pushing pages can be directly displayed, thus, the sharing objects that can be directly accessed through the video sharing card can be enriched, and the pushing path for the relevant sharing objects can be shortened.

Embodiments of the present disclosure provide a video pushing method. The method includes:
detecting a trigger operation on a video sharing card during displaying the video sharing card, wherein the video sharing card is determined based on a video type of a shared video and an associated sharing object of the shared video, and the video sharing card includes a plurality of candidate card regions; and in response to detecting the trigger operation on the video sharing card, determining a target card region that matches a trigger position of the trigger operation among the plurality of candidate card regions, and
displaying a pushing page corresponding to the target card region, wherein the pushing page includes a video page of the shared video and/or an object information page of the associated sharing object.

Embodiments of the present disclosure further provide video pushing apparatus. The apparatus includes: a detection module, configured to detect a trigger operation on a video sharing card during displaying the video sharing card, wherein the video sharing card is determined based on a video type of a shared video and an associated sharing object of the shared video, and the video sharing card includes a plurality of candidate card regions; and a display processing module, configured to, in response to detecting the trigger operation on the video sharing card, determine a target card region that matches a trigger position of the trigger operation among the plurality of candidate card regions, and display a pushing page corresponding to the target card region, wherein the pushing page includes a video page of the shared video and/or an object information page of the associated sharing object.

Embodiments of the present disclosure further provide an electronic device. The electronic device includes: a processor; and a memory for storing executable instructions; wherein the processor is configured to read the executable instructions from the memory and execute the executable instructions to implement the video pushing method according to the embodiments of the present disclosure.

Embodiments of the present disclosure further provide a computer-readable storage medium, wherein the computer-readable storage medium has a computer program stored thereon, and the computer program is used to implement the video pushing method according to the embodiments of the present disclosure.

### BRIEF DESCRIPTION OF DRAWINGS

With reference to the accompanying drawings and the following detailed description, the above and other features, advantages and aspects of embodiments of the present disclosure will become more apparent. Throughout the drawings, the same or similar reference numerals indicate the same or similar elements. It should be understood that the drawings are schematic, and elements are not necessarily drawn to scale.
Fig. 1 is a flow diagram of a video pushing method according to embodiments of the present disclosure;
Fig. 2A is a schematic diagram of a video sharing card according to embodiments of the present disclosure;
Fig. 2B is a schematic diagram of another video sharing card according to embodiments of the present disclosure;
Fig. 3 is a schematic diagram of another video sharing card according to embodiments of the present disclosure;
Fig. 4A is a schematic diagram of another video sharing card according to embodiments of the present disclosure;
Fig. 4B is a schematic diagram of another video sharing card according to embodiments of the present disclosure;
Fig. 5A is a schematic diagram of another video sharing card according to embodiments of the present disclosure;
Fig. 5B is a schematic diagram of another video sharing card according to embodiments of the present disclosure;
Fig. 6 is a schematic diagram of another video sharing card according to embodiments of the present disclosure;
Fig. 7 is a schematic diagram of a video pushing apparatus according to embodiments of the present disclosure; and
Fig. 8 is a schematic diagram of an electronic device according to embodiments of the present disclosure.

### DETAILED DESCRIPTION

The embodiments of the present disclosure will be described in more detail below with reference to the accompanying drawings. Although certain embodiments of the present disclosure are shown in the accompanying drawings, it should be understood that the present disclosure can be implemented in various forms and should not be construed as limited to the embodiments set forth herein. Instead, these embodiments are provided for a more thorough and complete understanding of the present disclosure. It should be understood that the drawings and embodiments disclosed herein are for illustrative purposes only and are not intended to limit the scope of protection of the present disclosure.

It should be understood that the various steps described in the disclosed method embodiments can be executed in different orders and/or in parallel. In addition, the method implementation may include additional steps and/or omit the steps shown. The scope of the present disclosure is not limited in this regard.

The term "including" and its variations used herein are open-ended, meaning "including but not limited to". The term "based" means "based at least in part". The term "one embodiment" means "at least one embodiment". The term "another embodiment" means "at least one further embodiment". The term "some embodiments" means "at least some embodiments". The relevant definitions of other terms will be provided in the following description.

It should be noted that the concepts such as "first" and "second" mentioned in the present disclosure are only used to distinguish different devices, modules, or units, and are not intended to limit the order or interdependence of the functions performed by these devices, modules, or units.

It should be noted that the modifications of "one" and "multiple" mentioned in the present disclosure are illustrative rather than restrictive, and those skilled in the art should understand that unless otherwise explicitly stated in the context, they should be understood as "one or more".

The names of the messages or information exchanged between multiple devices in the disclosed embodiments are for illustrative purposes only and are not intended to limit the scope of these messages or information.

To solve the above problems, embodiments of the present disclosure provide a video pushing method, which will be introduced below based on specific embodiments.

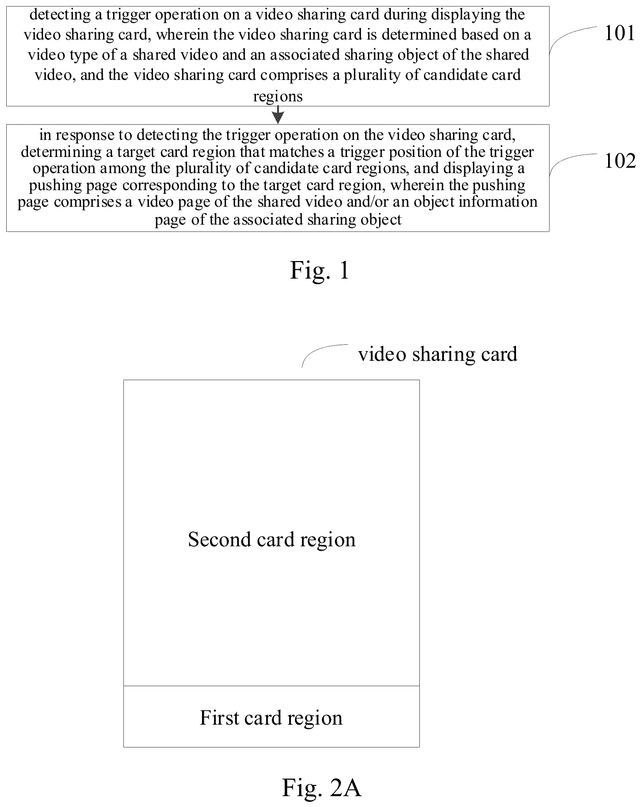

Fig. 1 is a flow diagram of a video pushing method according to embodiments of the present disclosure. The method can be executed by a video pushing apparatus, and the apparatus can be realized by software and/or hardware, and is generally integrated in an electronic device. As shown in Fig. 1, the method includes the following steps.

In step 101, detecting a trigger operation on a video sharing card during displaying the video sharing card.

It can be understood that in an embodiment of the present disclosure, a video is shared in the common form of a video sharing card, and the video sharing card is determined based on a video type and an associated sharing object of the shared video. The associated sharing object can be any object to be pushed, including but not limited to items such as "fruits" and "kitchenware", as well as activities such as "red packet activity", and the specific sharing object can be determined according to the corresponding video type. For more details on how the associated sharing object is determined, please refer to the subsequent embodiments, which will not be elaborated here.

In embodiments of the present disclosure, the video sharing card includes a plurality of candidate card regions, each of the plurality of candidate card regions corresponds to the shared video or the associated sharing object corresponding to the shared video, and the shared video may also be regarded as an associated sharing object. Different candidate card regions correspond to different associated sharing objects, thus, entry points for multiple associated sharing cards can be set up based on the video sharing card. To determine an associated sharing object for direct push, in the embodiments of the present disclosure, the trigger operation on the video sharing card is detected. Here, the trigger operation can be performed by a sharing-end user or a shared-end user, which is not limited here.

It should be understood that in an embodiment, to enrich the associated sharing objects corresponding to the video sharing card, in an embodiment of the present disclosure, the video sharing card includes a plurality of candidate card regions, and pushing pages corresponding to each candidate card region are different. Before displaying the video sharing card, the video sharing card can be displayed on a corresponding video sharing page in response to receiving a video sharing instruction carrying the video sharing card. The video sharing card includes a first card region and a second card region. The first card region is determined according to associated sharing information corresponding to the associated sharing object determined according to the video type, and the associated sharing object information corresponds to the associated sharing object, allowing users to easily get the key information about the specific sharing object based on the associated sharing object information. The second card region is determined according to shared video information of the shared video, and the shared video information includes but not limited to creator information of the shared video, and a video interface.

It should be noted that in different application scenarios, the first card region and the second card region are arranged in different ways and occupy different areas. There can be one or more first card regions. For example, in some possible embodiments, the first card region and the second card region in the video sharing card are arranged and displayed in a top-bottom distribution, as shown in Fig. 2A. In response to a single first card region, the area occupied by the first card region is smaller compared to the second card region, the first card region may serve as a "lower card" part of the video sharing card, while the second card region may serve as an "upper card" part of the video sharing card.

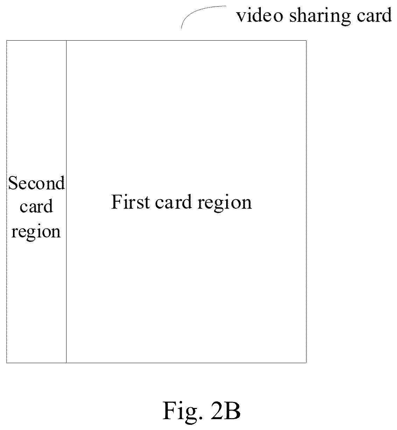

In some possible embodiments, the first card region and the second card region in the video sharing card are displayed in a left-right distribution, as shown in Fig. 2B. In response to a single first card region, the area occupied by the first card region is smaller compared to the second card region, the first card region may serve as a "left card" part of the video sharing card, while the second card region may serve as an "right card" part of the video sharing card.

In addition, the video sharing page in the embodiments of the present disclosure may vary with application scenarios, for example, the video sharing page can be an instant messaging interface, or the video sharing page can be a forum sharing page on a social forum.

In step 102, in response to detecting the trigger operation on the video sharing card, determining a target card region that matches a trigger position of the trigger operation among the plurality of candidate card regions, and displaying a pushing page corresponding to the target card region, wherein the pushing page includes a video page of the shared video and/or an object information page of the associated sharing object.

In an embodiment of the present disclosure, in response to detecting the trigger operation on the video sharing card, the target card region that matches the trigger position of the trigger operation is determined among the plurality of candidate card regions. Here, the trigger operation can be triggered by the user's finger or by the user's voice input, etc., which is not limited here.

In response to the trigger position being within a target card region, the trigger position is considered to match the target card region. As a result, the pushing page corresponding to the target card region can be displayed.

In some possible embodiments, the pushing page can be the video page of the shared video, that is, the target card region corresponds to the shared video, and the target card region can be the second card region in the above embodiments. Displaying the pushing page corresponding to the target card region includes: playing the shared video corresponding to the second card region to display the video page of the shared video, so as to directly access the shared video based on the trigger operation on the target card region.

In some possible embodiments, the pushing page can be the object information page of the associated sharing object, that is, for example, in response to the target card region being the first card region in the above embodiments, displaying the pushing page corresponding to the target card region includes: displaying the object information page of the associated sharing object which can be a video-related push item, so as to directly view the object information page of the associated sharing object based on the trigger operation on the target card region, thus shortening the sharing path of the associated sharing object. In this embodiment, the object information page of the associated sharing object can be displayed only for a preset duration. After the preset duration, the object information page of the associated sharing object will be closed, and the playback of the shared video will begin.

In some possible embodiments, the pushing page can be the video page of the shared video and the object information page of the associated sharing object, that is, in response to the target card region being the first card region in the above embodiment, displaying the pushing page corresponding to the target card region includes: playing the shared video corresponding to the second card region and displaying the object information page of the associated sharing object corresponding to the first card region on the video page of the shared video. Here, the pushing pages may include the video page of the shared video and the object information page. In this way, while displaying the shared video, the sharing path of the associated sharing object is shortened.

In the embodiments, the shared video corresponding to the video sharing card can be directly played, and the object information page of the associated sharing object can be displayed on the video playback page of the shared video. Here, the display mode of the object information page can be one selected from the group consisting of "pull-up page display", "floating layer page display", and "sliding page display". In the embodiments, the object information page can provide a "full screen" display control. In response to the "full screen" display control being triggered, the corresponding object information page will be displayed in full screen. The object information page may also provide a "close" display control. In response to the "close" display control being triggered, the corresponding object information page will be closed. In some possible embodiments, in response to detecting that a user clicks on a video playback interface region, the video playback page may also be displayed in full screen, and the object information page is displayed on the video playback page in the form of an anchor point. In response to the anchor point being clicked, the corresponding object information page will be pulled up.

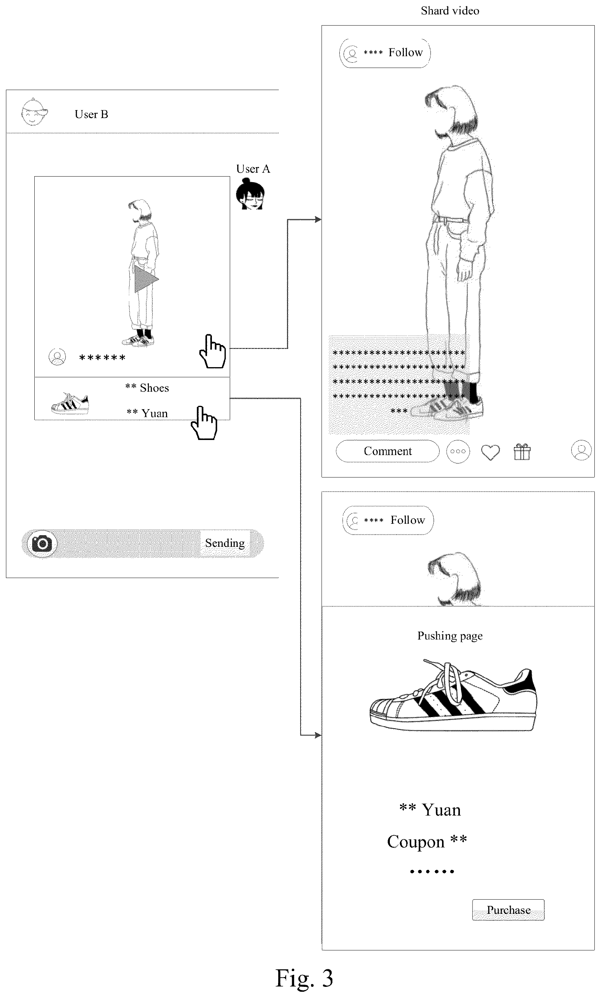

For example, as shown in Fig. 3, the first card region and the second card region in the video sharing card are arranged and displayed in a top-bottom distribution, the associated sharing object is "shoes", the associated sharing object information includes the name, price information and pictures of the shoes, the video sharing card is shared by user A to user B on the instant messaging interface, and the trigger operation (by user A or user B) on the video sharing card is detected. In response to detecting that the trigger position on the video sharing card is located in the first card region, the pushing page of the "shoes" is displayed above the shared video in a "pull-up display" manner, and in response to detecting that the trigger position on the video sharing card is located in the second card region, the shared video of the "shoes" is directly played.

To sum up, in the video pushing method provided by the embodiments of the present disclosure, when the video sharing card is displayed, the trigger operation on the video sharing card is detected. Here, the video sharing card is determined based on the video type of the shared video and the associated sharing object of the shared video, and the video sharing card includes the plurality of candidate card regions. In response to detecting the trigger operation on the video sharing card, the target card region matching the trigger position of the trigger operation is determined among the plurality of candidate card regions, and the pushing page corresponding to the target card region is displayed. Here, the pushing pages include the video page of the shared video and/or the object information page of the associated sharing object. Therefore, by arranging different card regions in the video sharing card, different pushing pages can be displayed directly based on the trigger operation on different card regions, which enriches the sharing objects that can be directly accessed through the video sharing card, and shortens the pushing path for the relevant sharing objects.

Hereinafter, the specific style of the video sharing card will be described in detail with reference to the embodiments.

In an embodiment of the present disclosure, the shared video corresponding to the video sharing card is a short video. Short videos are a form of internet content distribution. They are typically videos with a duration of less than 5 minutes that are shared on new media platforms. Short videos are prerecorded video content.

In the embodiments, the associated sharing object can be an associated push item (such as "kitchenware" and "shoes") with a preset anchor link in the short video. Here, the associated push item with the preset anchor link may have a "trailer" relationship with the short video, and can enable an "Order" service within the short video. Accordingly, the pushing page corresponding to the associated sharing object is an item pushing page of the associated push item, which includes detailed item information of the associated push item and an "order" control.

In the actual execution process, after detecting a short video sharing instruction, whether there is an associated push item with a preset anchor link in the short video is detected, and if yes, a first card region is set in the video sharing card. The first card region can contain associated sharing object information of the associated sharing object.

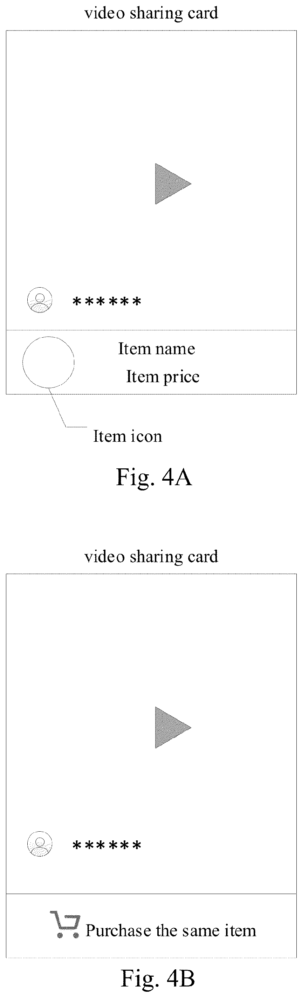

In different application scenarios, the associated sharing object information is different. In some possible embodiments, as shown in Fig. 4A, the associated sharing object information may include the item icon, item name, item price, etc. of the associated push item, and the associated sharing object information is used as an "explicit anchor point". In response to the first card region being triggered, the user will be directly redirected to the item pushing page of the associated push item.

In some possible embodiments, as shown in Fig. 4B, the associated sharing object information may include a preset ordering icon, and related ordering guidance information (such as "Purchase the same item"). The associated sharing object information serves as an "explicit anchor point". In response to the first card region being triggered, the user will be directly redirected to the item pushing page of the associated push item.

In some possible embodiments, in response to no associated push item with a preset anchor link existing in the short video, other information may also be displayed in a card region corresponding to the first card region, for example, any information such as video theme information of the short video. In response to the user triggering the first card region, similar to triggering the second card region, the user is redirected to a corresponding video playback interface.

In the embodiments of the present disclosure, in response to the shared video corresponding to the video sharing card being a live video, the associated sharing object will vary depending on the application scenario, as illustrated by the following examples.

In some possible embodiments, the associated sharing object includes a live push item corresponding to the live video. After acquiring a live video sharing instruction, in response to the live video being in an item pushing stage, the current live item to be pushed is a live push item corresponding to the live video, or the live push item corresponding to the live video may also be a live item selected by the user in a live item list when sharing the live video.

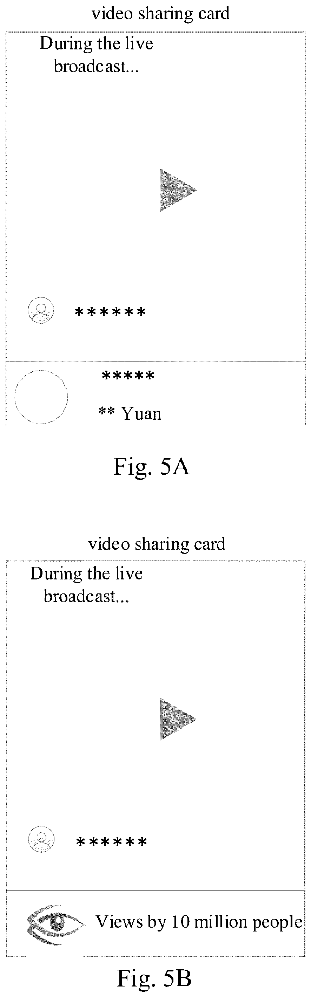

In the embodiments, the pushing page corresponding to the sharing object is an item pushing page of the live push item corresponding to the live video, and the pushing page may include the detailed item information (item image, item price, item name, etc.) of the live push item, and an "Order" function control. In the embodiments, as shown in Fig. 5A, a status label corresponding to the live video may also be displayed in the second card region, for example, "During the live broadcast".

In some possible embodiments, the associated sharing object includes an activity page of a live streaming activity object, which can be a "coupon", "red packet", "lucky bag", etc. After acquiring the live video sharing instruction, in response to the live video being in an activity pushing stage, the current activity object to be pushed is the live streaming activity object corresponding to the live video.

In the embodiments, the pushing page corresponding to the sharing object is the activity page of the live streaming activity object corresponding to the live video, and the interactive page is used to provide activity services, such as "red packet rain" activity and "countdown red packet" activity.

In some possible embodiments, the associated sharing object is a viewer object corresponding to the live video. The viewer object can be "current viewers of the live stream when the sharing instruction is received" or "viewers of the shared video".

In the embodiments, the pushing page of the associated sharing object can be an object display page of the viewer object corresponding to the live video. Here, the viewer object display page may display the user information, user avatar and the like of the viewer in the form of a list.

As shown in Fig. 5B, in the embodiments, the number of viewers and the like can be displayed in the second card region of the video sharing card.

Therefore, in the embodiments of the present disclosure, by triggering the sharing object information visible in the first card region, the pushing page of the associated sharing object can be displayed, the "what you see is what you get" pushing effect can be realized, and the interactive experience of users can be improved.

Of course, in the actual execution process, one or more pieces of associated sharing object information can be displayed in the first card region. In the case of multiple pieces of associated sharing object information, in response to the multiple pieces of associated sharing object information being able to be displayed on the same pushing page, a pushing page containing pushing information of multiple associated sharing objects can be displayed. For example, in response to the associated sharing object containing a push item a and a push item b, the pushing pages of the push item a and the push item b can be displayed simultaneously. In response to the multiple pieces of associated sharing object information being unable to be displayed on the same pushing page, a triggered target associated object can be determined according to a trigger position on the first card region, and the pushing page corresponding to the target associated object can be displayed.

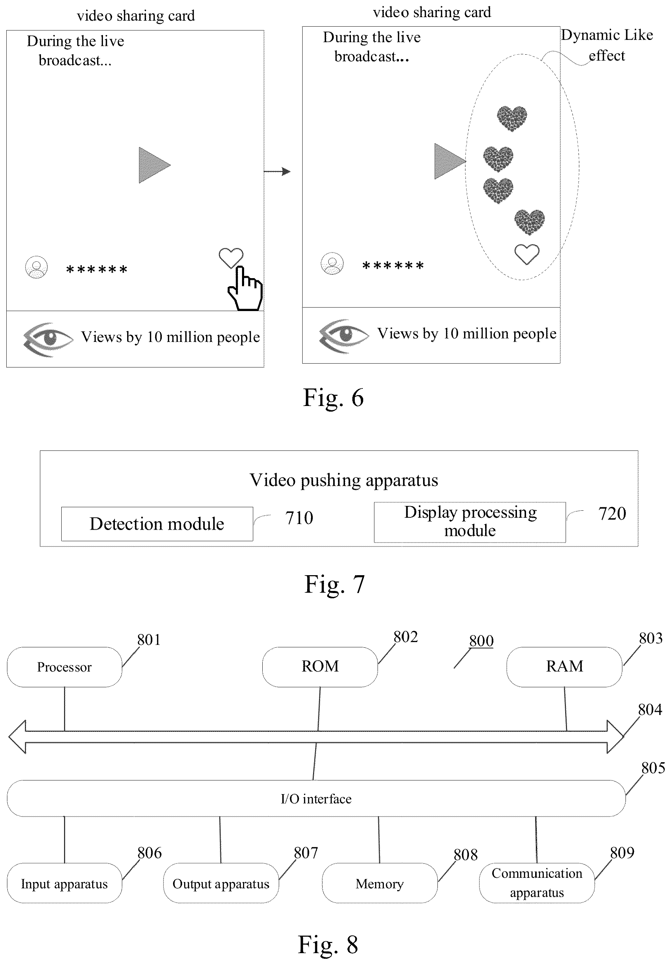

In embodiments of the present disclosure, in order to further enhance the interactive experience of the user, interactive function controls can be displayed in the second card region of the video sharing card, and dynamic interactive effects can be displayed in the second card region after the interactive function controls are triggered. As shown in Fig. 6, a "Like" function control can be displayed in the second card region of the video sharing card, and a dynamic Like effect can be displayed in the second card region after the "Like" function control is triggered.

To sum up, the video pushing method provided by the embodiments of the present disclosure can generate corresponding video sharing cards according to application scenarios, and can display an associated sharing object corresponding to a scenario in the first card region of the video sharing card, and display the pushing page of the associated sharing object in response to the first card region being triggered, thus, the "direct access" of the pushing page can be realized and the pushing path of the associated sharing object can be shortened.

To realize the above embodiments, the present disclosure also provides a video pushing apparatus. Fig. 7 is a schematic diagram of a video pushing apparatus according to embodiments of the present disclosure. The apparatus can be realized by software and/or hardware and is generally integrated in an electronic device for video pushing. As shown in Fig. 7, the apparatus includes a detection module 710 and a display processing module 720.

The detection module 710 is configured to, detect a trigger operation on a video sharing card during displaying the video sharing card,

wherein the video sharing card is determined based on a video type of a shared video and an associated sharing object of the shared video, and the video sharing card includes a plurality of candidate card regions.

The display processing module 720 is configured to, in response to detecting the trigger operation on the video sharing card, determine a target card region that matches a trigger position of the trigger operation among the plurality of candidate card regions, and display a pushing page corresponding to the target card region, wherein the pushing page includes a video page of the shared video and/or an object information page of the associated sharing object.

The video pushing apparatus provided by the embodiments of the present disclosure can perform the video pushing method provided by any embodiment of the present disclosure, have corresponding functional modules for executing the method and can achieve similar beneficial effects. Their implementation principles are similar and will not be repeated here.

To realize the above embodiments, the present disclosure also provides a computer program product, including computer programs/instructions, which, when executed by a processor, realize the video pushing method according to the above embodiments.

Fig. 8 is a schematic diagram of an electronic device according to embodiments of the present disclosure.

Refer to Fig. 8 which is a schematic diagram of an electronic device 800 suitable for implementing the embodiments of the present disclosure. The electronic device 800 in the embodiment of the present disclosure may include, but is not limited to, mobile terminals such as mobile phones, notebook computers, digital broadcast receivers, personal digital assistants (PDA), tablet computers (PAD), portable multimedia players (PMP), and vehicle-mounted terminals (such as vehicle-mounted navigation terminals), and fixed terminals such as digital TV and desktop computers. The electronic device shown in Fig. 8 is only an example, and should not impose any limitations on the functionality and scope of use of the embodiments of the present disclosure.

As shown in Fig. 8, the electronic device 800 may include a processor (such as a central processing unit, and a graphics processor) 801, it may execute various appropriate actions and processes according to a program stored in a read-only memory (ROM) 802 or a program loaded from a memory 808 to a random-access memory (RAM) 803. In RAM 803, various programs and data required for operations of the electronic device 800 are also stored. The processor 801, ROM 802, and RAM 803 are connected to each other by a bus 804. An input/output (I/O) interface 805 is also connected to the bus 804.

The following apparatuses can be connected to the I/O interface 805: an input apparatus 806 such as a touch screen, a touchpad, a keyboard, a mouse, a camera, a microphone, an accelerometer, and a gyroscope; an output apparatus 807 such as a liquid crystal display (LCD), a loudspeaker, and a vibrator; a memory 808 such as a magnetic tape, and a hard disk drive; and a communication apparatus 809. The communication apparatus 809 may allow the electronic device 800 to wireless-communicate or wire-communicate with other devices so as to exchange data. Although Fig. 8 shows the electronic device 800 with various apparatuses, it should be understood that it is not required to implement or possess all the apparatuses shown. Alternatively, it may implement or possess the more or less apparatuses.

In particular, according to the embodiment of the present disclosure, the process described above with reference to the flow diagram can be achieved as a computer software program. For example, embodiments of the present disclosure include a computer program product, it includes a computer program loaded on a non-transient computer-readable medium, and the computer program contains a program code for executing the method shown in the flow diagram. In such embodiments, the computer program can be downloaded and installed from the network by the communication apparatus 809, or installed from the memory 808, or installed from ROM 802. When the computer program is executed by the processor 801, the above functions defined in the video pushing method in the embodiments of the present disclosure are executed.

The above computer-readable medium in the present disclosure can be a computer-readable signal medium, a computer-readable storage medium, or any combinations of the two. The computer-readable storage medium can be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random-access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium can be any visible medium that contains or stores a program, and the program can be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium can be transmitted by using any suitable medium, including but not limited to: a wire, an optical cable, a radio frequency (RF) or the like, or any suitable combinations of the above.

In some implementation modes, a client and a server can be communicated by using any currently known or future-developed network protocols, such as a HyperText Transfer Protocol (HTTP), and may interconnect with any form or medium of digital data communication (such as a communication network). Examples of the communication network include a local region network ("LAN"), a wide region network ("WAN"), an internet work (such as the Internet), and an end-to-end network (such as an ad hoc end-to-end network), as well as any currently known or future-developed networks.

The above-described computer-readable medium can be included in the above-described electronic device, or may also exist alone without being assembled into the electronic device.

The above-described computer-readable medium carries one or more programs that, when executed by the electronic device, cause the electronic device to: detect a trigger operation on a video sharing card during displaying the video sharing card, wherein the video sharing card is determined based on a video type of a shared video and an associated sharing object of the shared video, and the video sharing card includes a plurality of candidate card regions; and in response to detecting the trigger operation on the video sharing card, determine a target card region that matches a trigger position of the trigger operation among the plurality of candidate card regions, and display a pushing page corresponding to the target card region, wherein the pushing page includes a video page of the shared video and/or an object information page of the associated sharing object. Therefore, different card regions are set in a video sharing card, and based on trigger operations on different card regions, different pushing pages can be directly displayed, thus, the sharing objects that can be directly accessed through the video sharing card can be enriched, and the pushing path for the relevant sharing objects can be shortened.

Electronic devices can be programmed with one or more programming languages or combinations thereof to write computer program code for executing the operations disclosed herein, the above programming languages include but not limited to object-oriented programming languages, such as Java, Smalltalk, and C++, and also includes conventional procedural programming languages, such as a "C" language or a similar programming language. The program code can be completely executed on the user's computer, partially executed on the user's computer, executed as a standalone software package, partially executed on the user's computer and partially executed on a remote computer, or completely executed on the remote computer or server. In the case involving the remote computer, the remote computer can be connected to the user's computer by any types of networks, including LAN or WAN, or can be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, can be achieved by using a dedicated hardware-based system that performs the specified function or operation, or can be achieved by using combinations of dedicated hardware and computer instructions.

The units involved in the embodiments of the disclosure can be realized by software or hardware. In certain cases, the name of a unit does not constitute a limitation on the unit itself.

The functions described above herein can be at least partially executed by one or more hardware logic components. For example, non-limiting exemplary types of the hardware logic component that can be used include: a field programmable gate array (FPGA), an application specific integrated circuit (ASIC), an application specific standard product (ASSP), a system on chip (SOC), a complex programmable logic device (CPLD) and the like.

In the context of the present disclosure, a machine-readable medium can be a tangible medium that contains or stores programs for use by or in combination with an instruction execution system, apparatus, or device. Machine readable media can be machine readable signal media or machine-readable storage media. Machine readable media may include, but are not limited to, electronic, magnetic, optical, electromagnetic, infrared, or semiconductor systems, devices, or equipment, or any suitable combination of the above. More specific examples of machine-readable storage media include electrical connections based on one or more wires, portable computer disks, hard drives, random access memory (RAM), read-only memory (ROM), erasable programmable read-only memory (EPROM or flash memory), optical fibers, compact disc read-only memory (CD-ROM), optical storage devices, magnetic storage devices, or any suitable combination of the above.

The above description is only for preferred embodiments of the present disclosure and explanations of the technical principles applied. Technicians in this field should understand that the scope of disclosure referred to in the present disclosure is not limited to technical solutions formed by specific combinations of the above technical features, and should also cover other technical solutions formed by arbitrary combinations of the above technical features or their equivalent features without departing from the above disclosed concept. For example, a technical solution formed by replacing the above features with (but not limited to) technical features with similar functions disclosed in the present disclosure.

In addition, although the operations are depicted in a specific order, this should not be understood as requiring these operations to be executed in the specific order shown or in a sequential order. Under certain circumstances, multitasking and parallel processing can be advantageous. Similarly, although several specific implementation details are included in the above discussion, they should not be interpreted as limiting the scope of the present disclosure. Certain features described in the context of individual embodiments can also be combined and implemented in a single embodiment. On the contrary, various features described in the context of a single embodiment can also be implemented individually or in any suitable sub combination in multiple embodiments.

Although the subject matter has been described using language specific to structural features and/or method logic actions, it should be understood that the subject matter defined in the appended claims is not necessarily limited to the specific features or actions described above. On the contrary, the specific features and actions described above are merely exemplary forms of implementing the claims.

## Claims

1. A video pushing method, comprising:
detecting a trigger operation on a video sharing card during displaying the video sharing card,
wherein the video sharing card is determined based on a video type of a shared video and an associated sharing object of the shared video, and the video sharing card comprises a plurality of candidate card regions; and
in response to detecting the trigger operation on the video sharing card, determining a target card region that matches a trigger position of the trigger operation among the plurality of candidate card regions, and displaying a pushing page corresponding to the target card region, wherein the pushing page comprises a video page of the shared video and/or an object information page of the associated sharing object.

2. The method according to claim 1, wherein pushing pages corresponding to each candidate card region are different, and before displaying the video sharing card, the method further comprises:
in response to receiving a video sharing instruction carrying the video sharing card, displaying the video sharing card on a corresponding video sharing page, wherein
the video sharing card comprises a first card region and a second card region, and wherein the first card region is determined according to associated sharing information corresponding to the associated sharing object determined according to the video type, and the second card region is determined according to shared video information of the shared video.

3. The method according to claim 2, wherein
the first card region and the second card region in the video sharing card are arranged and displayed in a top-bottom distribution; or
the first card region and the second card region in the video sharing card are displayed in a left-right distribution.

4. The method according to claim 2 or 3, wherein in response to the target card region being the first card region, the displaying the pushing page corresponding to the target card region comprises:
playing a shared video corresponding to the second card region and displaying an object information page of an associated sharing object corresponding to the first card region on a video page of the shared video;
or displaying the object information page of the associated sharing object.

5. The method according to claim 4, wherein the displaying the object information page of the associated sharing object comprises:
displaying the object information page of the associated sharing object for a preset duration, and after the preset duration, closing the object information page of the associated sharing object and playing the shared video.

6. The method according to claim 4 or 5, wherein display modes of displaying the object information page of the associated sharing object comprise a pull-up page display, a floating layer page display, and a sliding page display.

7. The method according to claim 2 or 3, wherein in response to the target card region being the second card region, the displaying the pushing page corresponding to the target card region comprises:
playing a shared video corresponding to the second card region to display a video page of the shared video.

8. The method according to any one of claims 2-7, further comprising:
displaying an interactive function control in the second card region, and displaying dynamic interactive effects in the second card region after the interactive function control is triggered.

9. The method according to any one of claims 1-8, wherein the video sharing page comprises:
an instant messaging interface.

10. The method according to any one of claims 1-8, wherein the video sharing page comprises:
a forum sharing page on a social forum platform.

11. The method according to any one of claims 1-10, wherein in response to the shared video corresponding to the video sharing card being a short video, the associated sharing object comprises an associated push item with a preset anchor link in the short video, and the object information page of the associated sharing object comprises an item pushing page of the associated push item;
in response to the shared video corresponding to the video sharing card being a live video, the associated sharing object comprises at least one selected from the group consisting of: a live push item corresponding to the live video, a live streaming activity object corresponding the live video, and a viewer object corresponding to the live video, and
the object information page of the associated sharing object comprises at least one selected from the group consisting of: an item pushing page of the live push item corresponding to the live video, an activity page of the live streaming activity object corresponding to the live video, and an object display page of the viewer object corresponding to the live video.

12. A video pushing apparatus, comprising:
a detection module, configured to detect a trigger operation on a video sharing card during displaying the video sharing card,
wherein the video sharing card is determined based on a video type of a shared video and an associated sharing object of the shared video, and the video sharing card comprises a plurality of candidate card regions; and
a display processing module, configured to, in response to detecting the trigger operation on the video sharing card, determine a target card region that matches a trigger position of the trigger operation among the plurality of candidate card regions, and display a pushing page corresponding to the target card region, wherein the pushing page comprises a video page of the shared video and/or an object information page of the associated sharing object.

13. An electronic device, comprising:
a processor; and
a memory for storing executable instructions;
wherein the processor is configured to read the executable instructions from the memory and execute the executable instructions to implement the video pushing method according to any one of the claims 1-11.

14. A computer-readable storage medium, wherein the computer-readable storage medium has a computer program stored thereon, and the computer program is used to implement the video pushing method according to any one of claims 1-11.

15. A computer program product, comprising computer programs or instructions, wherein the computer programs or instructions, when executed by a processor, implement the video pushing method according to any one of claims 1-11.
